# EUROPÄISCHE PATENTANMELDUNG

(11) **EP 2 407 371 A1**
(43) Veröffentlichungstag der Anmeldung: **18.01.2012**
(21) Anmeldenummer: 11172645.1
(22) Anmeldetag: 05.07.2011
(51) Int. Cl.: B62D 21/15

(54) **Sicherheitsstruktur für Fahrzeuge**

(30) Priorität: 14.07.2010 DE 102010031330
(71) Anmelder: Ford Global Technologies, LLC, Dearborn, MI 48126 (US)
(72) Erfinder: van Oirschot, Dirk, 41366 Schwalmtal (DE); Giazitzis, Georgios, 50171 Kerpen (DE)
(74) Vertreter: Dörfler, Thomas

(57) **Zusammenfassung**

Die Erfindung betrifft eine Sicherheitsstruktur (1) für Fahrzeuge (F), wobei die Sicherheitsstruktur (1) einen unteren Lastweg (L) mit einem unteren Längsträger (3) zur Kraftweiterleitung in die Tragstruktur (T) des Fahrzeuges (F) bei einem Frontalaufprall aufweist.

Zur Optimierung der Kraftweiterleitung sowie um den Längsträger im Falle einer niedrigen Aufprallgeschwindigkeit, wie zum Beispiel bei einem Fußgängerunfall, unbeschädigt zu erhalten und eine leichte Austauschbarkeit des Längsträgers zu ermöglichen, wird vorgeschlagen, dass der untere Längsträger in einer Normalposition in Fahrtrichtung beabstandet zu einem zugeordneten Querlenker gehalten ist und mit dem Frontalaufprall in eine Crashposition hinein bringbar ist, in der er Kraft übertragend auf den Querlenker einwirkt.

## Beschreibung

Die Erfindung betrifft eine Sicherheitsstruktur für Fahrzeuge, wobei die Sicherheitsstruktur einen unteren Lastweg mit einem unteren Längsträger zur Kraftweiterleitung bei einem Frontalaufprall in die Tragstruktur des Fahrzeuges aufweist.

Bekanntermaßen weisen heutige Sicherheitsstrukturen einen oberen und einen unteren Lastweg zur Weiterleitung und Absorption von Kräften bei einem Frontalaufprall auf, wobei der untere Längsträger zur Weiterleitung eingekoppelter Kräfte im unteren Bereich eines frontseitig vorgesehenen Stoßfängers in dem unteren Lastweg vorgesehen ist. Ein derartiger Längsträger ist in der Regel symmetrisch beidseitig, d.h. als linksseitiger unterer Längsträger und als rechtsseitiger unterer Längsträger, in der Sicherheitsstruktur im Vorderwagen vorgesehen.

In der EP 1 604 869 B1 wird eine Sicherheitsstruktur offenbart, in der der untere Längsträger in seinem in Fahrtrichtung vorderem Ende durch einen Teil der Motoraufhängung gehalten wird.

In der DE 198 51 495 A1 wird vorgeschlagen, den unteren Längsträger in einem vom Stoßfänger entfernten Punkt mit einem zugeordneten oberen Längsträger oder dem zugeordneten Schweller zu verbinden.

Der Erfindung liegt die Aufgabe zugrunde, eine Sicherheitsstruktur der eingangs genannten Art mit dem unteren Längsträger so weiterzuentwickeln, dass dieser die Kräfte optimal weiterleiten kann und überdies im Falle einer niedrigen Aufprallgeschwindigkeit, wie zum Beispiel bei einem Fußgängerunfall, soweit unbeschädigt bleibt, dass er wiederverwendet werden kann. Zielsetzung ist zudem eine leichte Austauschbarkeit des Längsträgers.

Die gestellte Aufgabe wird erfindungsgemäß durch die Merkmale des Anspruches 1 gelöst. Vorteilhafte Weiterbildungen werden in den anhängenden Unteransprüchen beschrieben. Die gestellte Aufgabe wird insbesondere dadurch gelöst, dass der untere Längsträger in einer Normalposition in Fahrtrichtung beabstandet zu einem zugeordneten Querlenker gehalten ist und mit dem Frontalaufprall in eine Crashposition hinein bringbar ist, in der er Kraft übertragend auf den Querlenker einwirkt.

Mit einem zugeordnetem Querlenker ist bei dem linksseitigen unteren Längsträger der linksseitige Querlenker und entsprechend bei dem rechtsseitigen unteren Längsträger der rechtseitige Querlenker gemeint. Infolge seiner Beabstandung zu dem Querlenker muss, unter Normallast, im Wesentlichen lediglich der untere Längsträger an sich gehalten werden. Erst mit seiner Bewegung in die Crashposition hinein und vor allem in der Crashposition an sich überträgt er Kräfte auf den Querlenker, die infolge des Frontalaufpralls auf den Vorderwagen des Fahrzeuges einwirken. Dieser überträgt diese Kräfte, insofern diese nicht durch Verformungsarbeit aufgezehrt sind, weiter auf die Tragstruktur.

Der Längsträger kann sich in der Crashposition unmittelbar auf dem Querlenker abstützen. Hierzu kann der untere Längsträger an seinem in Fahrtrichtung vorderen Ende eine der dem unteren Längsträger zugeordnete Außenseite des Querlenkers angepasste Stirnseite zur Anlage an dem Querlenker aufweisen. Bevorzug wird jedoch ein mittelbares Abstützen über eine zwischengeschaltete Vorrichtung, die vorzugsweise eine optimierte Krafteinkopplung ermöglicht. Dies kann sich auf die Größe des Druckes durch die Krafteinkopplung auf den Querlenker und/oder auf die Richtung und Richtungskonstanz der Krafteinkopplung auf den Querlenker während des Frontalaufpralls beziehen. Diese kann zudem so ausgelegt sein, dass sie eine bestimmte eingekoppelte Energie absorbiert. Abhängig vom jeweiligen Fahrzeugtyp bzw. von dem weiteren Aufbau der Sicherheitsstruktur, kann der untere Lastweg mit der erfindungsgemäßen Anordnung des Längsträger so ausgelegt sein, dass er im Überlastfall bei hohen Aufprallgeschwindigkeiten bestimmte Kräfte, beispielsweise in der Größenordnung von etwa 35 kN, aufnehmen und in die Tragstruktur hinein weiterleiten und eine Energieabsorption, beispielsweise im Bereich von etwa 700mm Verformung, leisten kann.

Es kann vorgesehen sein, dass der untere Längsträger lediglich bei hohen Aufprallgeschwindigkeiten in seine Crashposition gebracht wird. Vorzugsweise ist jedoch vorgesehen, dass der untere Längsträger auch bei niedrigen Aufprallgeschwindigkeiten in seine Crashposition gebracht wird. Hierbei ist der untere Längsträger vorzugsweise so ausgelegt, dass er die bei niedrigen Aufprallgeschwindigkeiten auftretenden Kräfte schadlos übertragen kann. Da der Träger unter Normallast nicht weiter durch Kraftübertragung belastet wird, kann seine vorgesehene Halterung eine entsprechend geringe Festigkeit aufweisen und, wie weiter unten ausgeführt, entsprechend unaufwendig hergestellt sowie leicht austauschbar ausgebildet sein. Zudem kann die Halterung so ausgelegt werden, dass sie auf dem Weg aus der Normalposition in die Crashposition hinein Aufprallenergie durch Verformung absorbiert.

Vorteilhaft wird der untere Längsträger bei dem Frontalaufprall aus seiner Normalposition in seine Crashposition hinein geführt. Die Führung kann so ausgelegt sein, dass der untere Längsträger auch bei höheren Aufprallgeschwindigkeiten kraftmechanisch günstig in seiner Crashposition an dem Querlenker positioniert wird. Vorzugsweise kann der untere Längsträger in seiner Crashposition in Höhe des Querlenkers und/oder fluchtend zum Querlenker angeordnet sein. Der untere Längsträger kann damit so zu dem Querlenker hin hinein führbar sein, dass er in seiner Crashposition die zu übertragende Kraft in einer Linie bzw. fluchtend und damit zumindest nahezu biegemomentfrei in den Querlenker einkoppeln kann. Ferner kann der Längsträger in seiner Crashposition, insbesondere hinsichtlich seiner Knickfestigkeit kraftmechanisch günstig, mit seiner Längsrichtung zumindest in etwa parallel zur Fahrtrichtung und damit in Richtung des Frontalaufpralls angeordnet sein.

Der untere Längsträger kann in seinem in Fahrtrichtung vorderen Ende mittels einer vorzugsweise als Querhalterung ausgebildeten Halterung an dem vorderen Achsträger des Fahrzeuges gehalten sein. Somit kann der Längsträger mechanisch stabil in zwei voneinander beabstandeten Bereichen gehalten werden, wobei er mit seinem in Fahrtrichtung hinteren Ende wie üblich an einem Querträger festgelegt sein kann. Die Halterung kann somit, konstruktiv nicht störend, seitlich an dem unteren Längsträger angreifen. Vorzugsweise greift die Querhalterung bezüglich ihrer Längserstreckung zumindest in etwa in Querrichtung, d.h. in y-Richtung an dem unteren Längsträger an. Durch die Anlagerung der Querhalterung an dem Achsträger kann der Längsträger in der Normalposition unbeeinflusst von möglichen Bewegungen des Querlenkers bei Autofahrt ruhig gehalten werden. Diese ermöglicht wiederum, dass die Halterung entsprechend unaufwendig ausgelegt werden kann.

Bei dem Frontalaufprall kann der untere Längsträger mit seinem in Fahrtrichtung vorderen Ende zu dem Querlenker hin in die Crashposition hinein geführt werden. Die Halterung bzw. die Querhalterung kann, wie weiter unten gezeigt, als Halterung und Führung für den Längsträger bei dessen Bewegung aus der Normalposition in die Crashposition hinein dienen. Ferner kann die Halterung bzw. die Querhalterung als die zwischengeschaltete Vorrichtung fungieren, mittels derer ein mittelbares Abstützen des vorderen Endes des unteren Längsträgers, vorzugweise mit einer optimierten Krafteinkopplung verbunden, ermöglicht wird.

Konstruktiv einfach kann die Querhalterung in einem dem Längsträger zugewandten ersten Endbereich eine Aufnahme für das in Fahrtrichtung vordere Ende des unteren Längsträgers aufweisen. Hierbei kann die Aufnahme in der Normalposition beabstandet zu dem Querlenker angeordnet sein und in der Crashposition kraftwirksam an dem Querlenker anliegen.

Die Querhalterung kann in einem von ihrem ersten Endbereich beabstandeten zweiten Endbereich Verbindungsmittel zur ihrer Verbindung mit dem vorderen Achsträger aufweisen. Zwischen dem ersten Endbereich und dem zweiten Endbereich kann ein Abschnitt angeordnet sein, in dem der erste Endbereich relativ zu dem zweiten Endbereich bezüglich einer ersten Achse senkrecht zu den Längsachsen von Querhalterung und unterem Längsträger mit der Bewegung des unteren Längsträgers in seine Crashposition hinein zu dem Querlenker hin vorzugsweise über Verformung bewegbar, wie umbiegbar, faltbar oder abknickbar, ist. Damit diese Verformung gezielt in diesem Abschnitt auftritt, kann dieser gegenüber Kräften gegen Fahrtrichtung einen geringeren Verformungswiderstand als die übrigen Abschnitte der Querhalterung aufweisen. Hierzu kann der Abschnitt eine gezielte konstruktive und/oder werkstoffspezifische Festigkeitsschwächung, wie zum Beispiel mittels eines verminderten Querschnitts, eines Einschnittes oder einer entfestigenden Wärmebehandlung, aufweisen. Vorzugsweise ist der Abschnitt im Gegensatz zu den übrigen Abschnitten ohne Verstärkungsstrukturen ausgestattet. Der Abschnitt kann vorteilhaft laschenartig mit einem eine größere Seite aufweisenden Querschnitt ausgebildet sein, wobei die größere Seite vorzugsweise zumindest etwa senkrecht zur Fahrtrichtung angeordnet ist. Mit der Bewegung des unteren Längsträgers in seine Crashposition hinein kann somit über die Verformung der Querhalterung bereits eine bestimmte Kraft absorbiert werden, bevor eine kraftwirksame Anlage des unteren Längsträgers an dem Querlenker entsteht.

Vorzugsweise kann die Aufnahme eine Anlagefläche umfassen, die in der Crashposition des unteren Längsträgers kraftwirksam an dem Querlenker anliegt. Somit kann der untere Längsträger mittelbar über die Aufnahme die zu übertragende Kraft in den Querlenker einkoppeln. Die Anlagefläche kann in der Normalposition in einem Winkel zur Längsachse des unteren Längsträgers angeordnet und mit Bewegung des unteren Längsträgers in die Crashposition hinein um die erste Achse gegen den Querlenker in eine Anlageposition hinein verschwenkbar sein. Vorzugsweise ist die Anlagefläche in der Crashposition unter Anlage an dem Querlenker kräftemechanisch günstig zumindest in etwa senkrecht zur Fahrtrichtung angeordnet. Vorzugsweise ist der untere Längsträger mit seinem vorderen Ende beabstandet zu der Anlagefläche mit der Querhalterung verbunden bzw. an derselben angelagert.

Die Aufnahme bzw. deren Anlagefläche kann dem Abschnitt der Außenseite des Querlenkers, in dem die Anlagefläche in der Crashposition anliegt, angepasst sein. Vorzugsweise kann die Anlagefläche zur leichteren Anlage an den Querlenker eine bezüglich einer xy-Ebene symmetrische Krümmung aufweisen, deren Krümmungsradius gegen Fahrtrichtung weist. Damit kann die Anlagefläche eine rinnenartige Form aufweisen, wobei diese einen flachen Rinnengrund zur flächigen Anlage an die Außenseite des Querlenkers aufweisen kann. An dieser Krümmung mittig in die Rinne hinein abgleitend, kann der untere Längsträger im Falle des Frontalunfalls in der Crashposition in eine stabile Anlageposition geführt werden, in der er biegemomentfrei auf den Querlenker einwirken kann.

Zur relativen Verschwenkung von Längsträger und Querhalter aus der Normalposition in die Crashposition hinein kann der untere Längsträger in seinem vorderen Ende um eine zweite Achse vorzugsweise parallel senkrecht zur Längsachse des unteren Längsträgers verschwenkbar in dem Aufnahmebereich angeordnet sein. Damit kann eine Belastung des unteren Längsträger infolge von Abknickung, Faltung etc. des ersten Endbereichs der Queraufnahme minimiert werden, welches insbesondere bei einem Aufprall bei geringer Aufprallgeschwindigkeit ermöglicht, dass der untere Längsträger unbeschadet bleibt.

Die Aufnahme der Querhalterung kann einen Aufnahmeraum aufweist, in den der untere Längsträger mit seinem vorderen Ende hineinragt und im dem der untere Längsträger vorzugsweise verschwenkbar gelagert ist. Das vordere Ende kann somit geschützt und in einem bestimmten Abstand zur Anlagefläche in der Aufnahme bzw. in deren Aufnahmeraum angeordnet bzw. schwenkbar gelagert sein.

Vorzugsweise wird die Querhalterung auf den Achsträger aufgesteckt. Als Verbindungsmittel zur Verbindung der Querhalterung mit dem vorderen Achsträger kann eine Klammer mit Schenkeln vorgesehen sein, die zur Ausbildung der Verbindung den vorderen Achsträger unter- und oberseitig übergreifen und vorzugsweise unter Vorspannung lose bleibend an demselben anliegen. Die Klammer kann auch an dem vorderen Achsträger verrasten.

Kraftmechanisch günstig kann der untere Längsträger zumindest in der Crashposition bezüglich der Querrichtung zwischen einer in Fahrtrichtung hinteren und einer in Fahrtrichtung vorderen Anlagerung des Querlenkers an dem vorderen Achsträger, vorzugsweise etwa fluchtend zu der vorderen Anlagerung Kraft übertragend auf den Querlenker einwirken. Insbesondere im letzten Fall kann die von dem unteren Längsträger in den Querlenker eingekoppelte Kraft in einer Linie und damit zumindest nahezu biegemomentfrei weiter in den Achsträger eingekoppelt werden.

Als besonderer Vorzug wird angesehen, dass die Querhalterung einstückig aus einem Blech gefaltet hergestellt sein kann. Mittels der Faltungen können der Aufnahmeraum und/oder die Befestigungsmittel gebildet werden. Damit kann die Querhalterung fertigungstechnisch einfach und kostengünstig gefertigt werden. Im Falle eines Frontalaufpralles mit geringer Aufprallgeschwindigkeit, bei dem erfindungsgemäß der untere Längsträger unverformt bleibt, die Querhalterung jedoch zur Kraftübertragung auf den Querlenker verformt wurde, kann die Querhalterung unaufwendig von dem unteren Längsträger und dem vorderen Achsträger abgezogen und ersetzt werden.

In einem weiteren Verformungsschritt bei einem Frontalaufprall kann sich das vordere Ende des Längsträgers aus seiner Verbindung mit der Querhalterung lösen und unmittelbar an der Innenseite des Aufnahmeraumes anliegen, ohne dass der Längsträger wesentlichen Schaden erleidet. Damit kann der Längsträger auch in diesem weiteren Schritt optimal zum Querlenker ausgerichtet werden. Bei einer noch höheren Belastung tritt jedoch die Gefahr auf, dass mit einem unmittelbaren Gegendrücken der Längsträger gegen den Querlenker insbesondere der Längsträger geschädigt wird und ausgetaucht werden muss.

Die vorliegende Erfindung wird im Folgenden anhand einer in einer Zeichnung dargestellten Ausführungsform näher erläutert. In der Zeichnung zeigen:
- Fig. 1: eine Untersicht auf ein Fahrzeug mit einer Sicherheitsstruktur mit zwei unteren Längsträgern,
- Fig. 2: eine Ausschnittsvergrößerung II aus Figur 1 mit einem linksseitigem unterem Längsträger,
- Fig. 3: eine schematisierte Draufsicht auf den Längsträger in Anbindung an einen Querlenker und
- Fig. 4 a bis 4b: jeweils eine Prinzipskizze mit dem unteren Längsträger zur Verdeutlichung der prinzipiellen Bewegung des Längsträgers aus seiner Normalposition (Figur 4a) in eine Crashposition (Figur 4c).

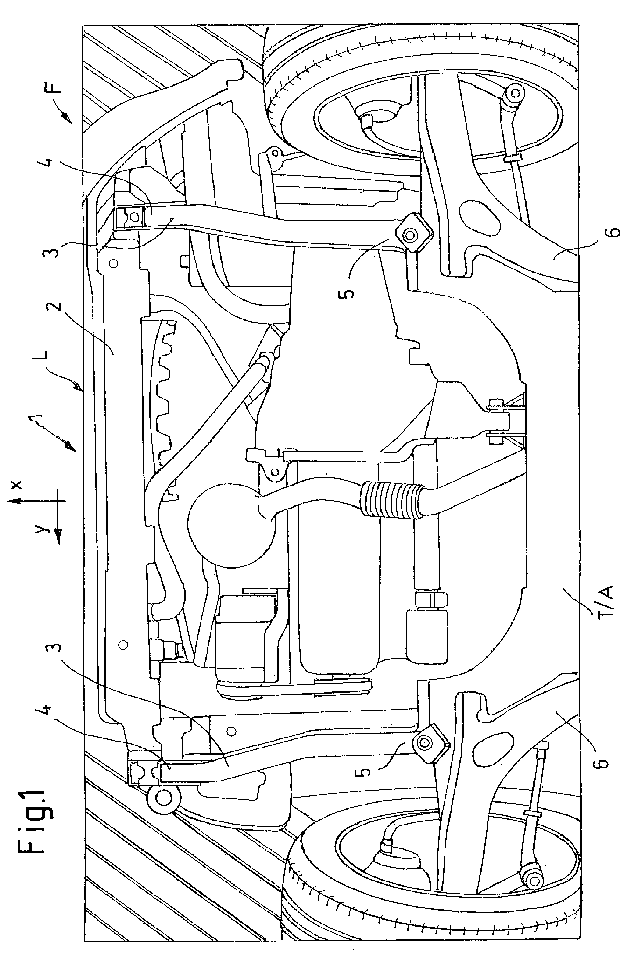

In den Figuren 1 bis 4 wird jeweils in unterschiedlichen Ansichten, Ausschnitten und Darstellungsweisen eine Sicherheitsstruktur 1 für Fahrzeuge F gezeigt. Die Sicherheitsstruktur 1 weist zusätzlich zu einem hier nicht sichtbaren oberen Lastweg einen unteren Lastweg L mit einem unteren Querträger 2 und zwei unteren Längsträger 3 zur Kraftweiterleitung in die Tragstruktur T des Fahrzeuges F bei einem Frontalaufprall auf.

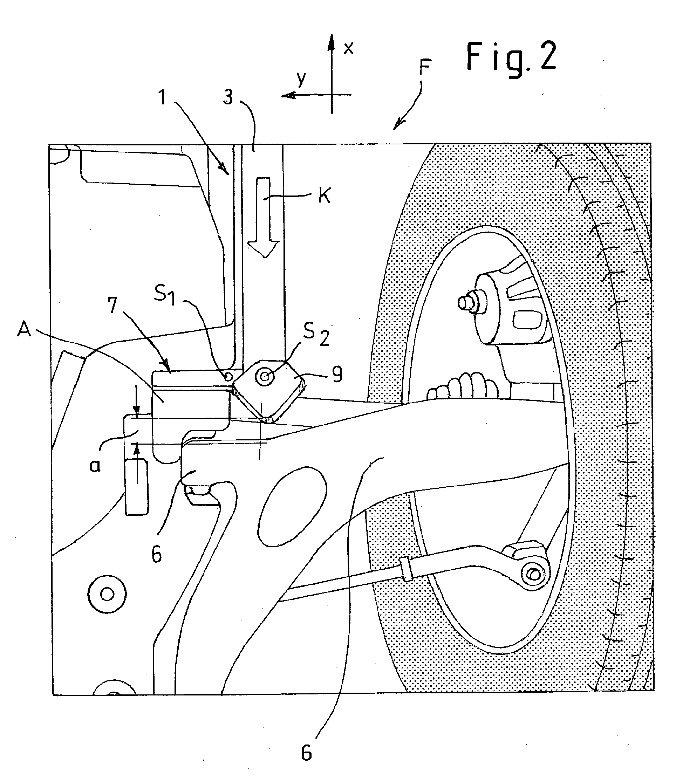

Die beiden unteren Längsträger 3 symmetrisch zur Fahrzeugmitte angeordnet und mit einem in Fahrtrichtung x hinteren Ende 4 sind die Längsträger 3 mit dem Querträger 2 verbunden. Mit ihrem anderen in Fahrtrichtung x vorderen Ende 5 sind die Längsträger 3 jeweils in einem Abstand a (Figur 2) zu einem zugeordneten Querlenker 6 des Fahrzeuges F angeordnet und seitlich mittels einer Querhalterung 7 in dieser Position gehalten. Die Querhalterung 7 ist mit dem vorderen Achsträger A der Tragstruktur T des Fahrzeuges F verbunden. Die Längsträger 3 sind in den Figuren 1 bis 4a in einer Normalposition dargestellt, in der sich das Fahrzeug F in einer normalen Straßenlage befindet und die Längsträger 3 der Sicherheitsstruktur 1 bis auf ihr Eigengewicht im Prinzip unbelastet sind.

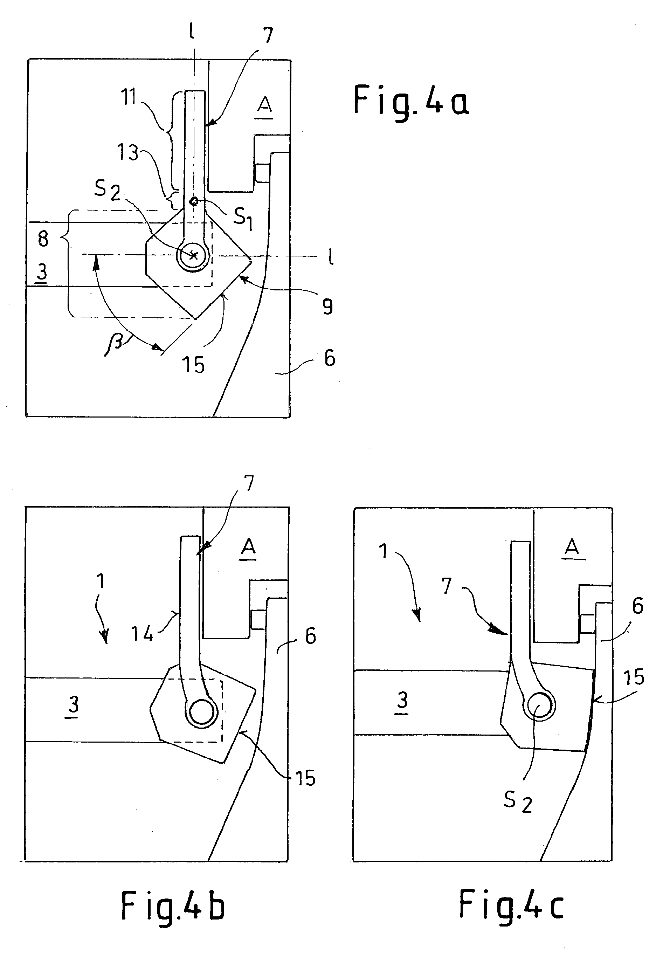

Wie in den Figuren 4a bis 4c anhand von Prinzipskizzen mit stark schematisiert gezeichneten Bauteilen der Sicherheitsstruktur 1 in einem Ablauf von drei Schritten gezeigt, sind die Längsträger 3 jeweils mit dem Frontalaufprall in eine in Figur 4c gezeigte Crashposition hinein bringbar, in der sie Kraft K übertragend auf den jeweils zugeordneten Querlenker 6 einwirken. Hierbei wirkt die Querhalterung 6 zugleich als Führung zur Positionierung des Längsträgers 3 in seine Crashposition hinein, in der er in Fahrtrichtung x fluchtend kraftwirksam an dem Querlenker 6 angreift. Hierbei stützt sich der Längsträger 3 über die Querhalterung 7 an dem Querlenker 6 ab.

Die Querhalterung 7 weist in einem dem Längsträger 3 zugewandten ersten Endbereich 8 eine Aufnahme 9 für den Längsträger 3 auf. Die Aufnahme 9 ist in der Normalposition im Abstand a zu dem Querlenker 6 angeordnet und liegt in der Crashposition kraftwirksam an dem Querlenker 6 an. Die Aufnahme 9 weist einen zum Längsträger 3 hin geöffneten Aufnahmeraum 10 auf, in den der Längsträger 3 mit seinem vorderen Ende 5 eingreift.

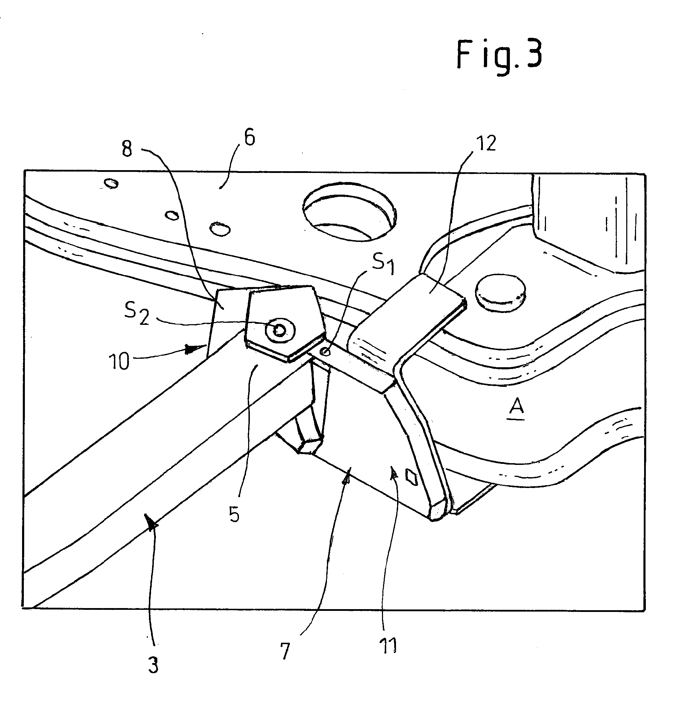

Wie insbesondere in Figur 3 ersichtlich, ist die Querhalterung 7 mit einem zweiten Endbereich 11 über hier als Klammer 12 ausgebildete Befestigungsmittel gegen Fahrtrichtung x über den vorderen Achsträger A der Trägerstruktur T aufgesteckt Die Klammer 12 liegt hier unter Vorspannung an dem Achsträger A an. Somit ist die Querhalterung 7 im bestimmten eingeschränkten Maße in Querrichtung y und in Fahrtrichtung x verschieblich gehalten, so dass der Längsträger 3 über die Querhalterung 7 nicht starr verbunden ist und somit in normaler Straßenlage des Fahrzeuges weitgehend unbelastet bleibt.

Wie in Figur 4 schematisch gezeigt, wird der erste Endbereich 8 der Queraufnahme 7 gegenüber dem zweiten Endbereich 11 um eine erste Achse s₁ senkrecht zur Fahrtrichtung x und zur Querrichtung y bzw. senkrecht zu den Längsachsen I von Längsträger 3 und Querhalterung 7 aus der Normalposition in die Crashposition hinein umgebogen oder abgeknickt. (Wegen der hier auftretenden Verformung ist die Lageangabe der ersten Achse S₁ in der Figur 4a lediglich als ungefähr anzusehen. Sie kann auch außerhalb der Querhalterung liegen.) Damit dieses Umbiegen oder Abknicken und eine entsprechend exakte Führung des Längsträgers 3 kontrolliert erfolgen kann, ist zwischen den beiden Endbereichen 8, 11 ein Abschnitt 13 mit einem in Einbaulage der Querhalterung 7 gegenüber Kräften gegen Fahrtrichtung x geringeren Verformungswiderstand vorgesehen. Die Querhalterung 7 ist hier kostengünstig aus einem Blech gefaltet. In den beiden Endbereichen sind Festigkeit steigernde Faltungen zur Ausbildung der Klammer 12 bzw. zur Begrenzung des Aufnahmeraumes 10 vorgesehen, während die Querhalterung 7 in dem Abschnitt 13 laschenartig mit einer größeren Seitenfläche 14 senkrecht zur Fahrtrichtung x ausgebildet ist.

Die Aufnahme 9 weist eine hier den Aufnahmeraum 10 begrenzende Anlagefläche 15 auf. Die Anlagefläche 15 ist in der Normalposition in einem Winkel β zur Längsachse I des unteren Längsträgers 3 angeordnet. Der Winkel β beträgt hier etwa 45°. Mit dem Umbiegen oder Abknicken um die erste Achse s₁ dreht sich die Anlagefläche 15 so gegen den Querlenker 6, dass sie in der Crashposition (Figur 4c) kraftmechanisch günstig flächig an demselben anliegt, wobei der Abstand a und der Winkel β entsprechend zueinander abgestimmt. Der Längsträger 3 ist hier mit seinem vorderen Ende 5 um eine zweite Achse s₂ parallel zur ersten Achse s₁ relativ zur Querhalterung 7 verschwenkbar in deren Aufnahme 9 angeordnet. Hierdurch wird ein ordnungsgemäßes Führen der Anlagefläche 15 gegen den Querlenker 6 erleichtert. Das vordere Ende 5 des Längsträgers 3 und dessen Anlagerung sind in dem Aufnahmeraum 10 geschützt.

Figur 4c gibt etwa die Lage des Längsträgers 3 wieder, in der der Längsträger 3 in seiner Crashposition bei einer niedrigen Aufprallgeschwindigkeit über die Querhalterung 7 an dem Querlenker 6 anliegt. In diesem Stadium ist zwar die Querhalterung 7 deformiert und nicht wieder verwendbar. Da die Querhalterung 7 jedoch die in den Längsträger 3 eingekoppelte Bewegungsenergie im wesentlichen absorbieren und an den Querlenker 6 einkoppeln kann, bleibt der Längsträger plastisch unverformt und kann bei einer Reparatur wiederverwendet werden. Da die Querhalterung 7 lediglich auf den Achsträger A aufgesteckt ist, kann sie leicht von demselben abgezogen werden, welches wiederum die Montage vereinfacht.

Es liegt auf der Hand, dass bei einer größeren Aufprallgeschwindigkeit bzw. einer größeren Bewegungsenergie eine weitere Verformung der Querhalterung dadurch auftreten kann, dass zum Beispiel der Längsträger aus seiner Schwenkverbindung mit der Aufnahme 8 gelöst und endseitig innenseitig gegen die Anlagefläche 15 gepresst wird. Nicht dargestellt ist zudem ein weiterer Fortschritt bei einem Frontalaufprall mit höherer Bewegungsenergie bzw. höherer Aufprallgeschwindigkeit, bei dem der Längsträger 3 unter eigener Deformation und damit Energieabsorption weiter gegen den Querlenker 6 gedrückt wird und eine fortschreitende Deformierung der Sicherheitsstruktur 1 auftritt.

### BEZUGSZEICHENLISTE

- 1: Sicherheitsstruktur
- 2: Querträger
- 3: Längsträger
- 4: hinteres Ende
- 5: vorderes Ende
- 6: Querlenker
- 7: Querhalterung
- 8: erster Endbereich
- 9: Aufnahme
- 10: Aufnahmeraum
- 11: zweiter Endbereich
- 12: Klammer
- 13: Abschnitt
- 14: Seitenfläche
- 15: Anlagefläche
- a: Abstand
- I: Längsachse
- s₁: erste Achse
- s₂: zweite Achse
- x: Fahrtrichtung
- y: Querrichtung
- A: Achsträger
- F: Fahrzeug
- K: Kraft
- L: unterer Lastweg
- T: Tragstruktur

## Patentansprüche

1. Sicherheitsstruktur für Fahrzeuge (F), wobei die Sicherheitsstruktur (1) einen unteren Lastweg (L) mit einem unteren Längsträger (3) zur Kraftweiterleitung in die Tragstruktur (T) des Fahrzeuges (F) bei einem Frontalaufprall aufweist,
**dadurch gekennzeichnet, dass**
der untere Längsträger (3) in einer Normalposition in Fahrtrichtung (x) beabstandet zu einem zugeordneten Querlenker (6) gehalten ist und mit dem Frontalaufprall in eine Crashposition hinein bringbar ist, in der er Kraft (K) übertragend auf den Querlenker (6) einwirkt.

2. Sicherheitsstruktur nach Anspruch 1,
**dadurch gekennzeichnet, dass**
der untere Längsträger (3) so in die Crashposition hinein führbar ist, dass er gegen Fahrtrichtung fluchtend zum Querlenker (6) kraftwirksam an demselben angreift.

3. Sicherheitsstruktur nach Anspruch 1 oder,
**dadurch gekennzeichnet, dass**
der untere Längsträger (3) in seinem in Fahrtrichtung (x) vorderen Ende (5) mittels einer Querhalterung (7) gehalten ist, die mit dem vorderen Achsträger (A) des Fahrzeuges (F) verbunden ist.

4. Sicherheitsstruktur nach Anspruch 2 oder 3,
**dadurch gekennzeichnet, dass**
die Querhalterung (7) in einem dem Längsträger (3) zugewandten ersten Endbereich (8) eine Aufnahme (9) für den unteren Längsträger (3) aufweist, wobei die Aufnahme (9) in der Normalposition beabstandet zu dem Querlenker (6) angeordnet ist und in der Crashposition kraftwirksam an dem Querlenker (6) anliegt.

5. Sicherheitsstruktur nach Anspruch 4,
**dadurch gekennzeichnet, dass** die Querhalterung (7) in einem zweiten Endbereich (11) Verbindungsmittel zur ihrer Verbindung mit dem vorderen Achsträger (A) und einen zwischen erstem Endbereich (8) und zweitem Endbereich (11) angeordneten Abschnitt (13) aufweist, in dem der erste Endbereich (8) relativ zu dem zweiten Endbereich (11) bezüglich einer ersten Achse (s₁) senkrecht zu den Längsachsen (I) von Querhalterung (7) und unteren Längsträger (3) mit der Bewegung des unteren Längsträgers (3) in seine Crashposition hinein zu dem Querlenker (6) hin umbiegbar oder abknickbar ist.

6. Sicherheitsstruktur nach Anspruch 5,
**dadurch gekennzeichnet, dass** die Aufnahme (9) eine Anlagefläche (15) zu ihrer kraftwirksamen Anlage an dem Querlenker (6) in der Crashposition aufweist, wobei die Anlagefläche (15) in der Normalposition in einem Winkel (ß) zur Längsachse (I) des unteren Längsträgers (3) angeordnet ist und mit Bewegung des unteren Längsträgers (3) in die Crashposition hinein um die erste Achse (s₁) gegen den Querlenker (6) verschwenkbar ist.

7. Sicherheitsstruktur nach Anspruch 5 oder 6,
**dadurch gekennzeichnet, dass** der untere Längsträger (3) um eine zweite Achse (s₂) parallel zur ersten Achse (s₁) verschwenkbar in der Aufnahme (9) angeordnet ist.

8. Sicherheitsstruktur nach einem der Ansprüche 5 bis 7,
**dadurch gekennzeichnet, dass** als Verbindungsmittel eine Klammer (12) vorgesehen ist, die zur Ausbildung der Verbindung den Achsträger (A) unter- und oberseitig übergreift und lose bleibend an demselben anliegt.

9. Sicherheitsstruktur nach einem der Ansprüche 1 bis 8,
**dadurch gekennzeichnet, dass** der untere Längsträger (3) bezüglich seiner Längsachse (I) zumindest in der Crashposition etwa fluchtend zu einer in Fahrtrichtung (x) vorderen Anlagerung des Querlenkers (6) an dem vorderen Achsträger (A) angeordnet ist.

10. Sicherheitsstruktur nach einem der Ansprüche 3 bis 9.
**dadurch gekennzeichnet, dass** die Querhalterung (7) einstückig aus einem Blech gefaltet ist.
